# EUROPÄISCHE PATENTSCHRIFT

(11) **EP 2 317 197 B1**
(45) Veröffentlichungstag und Bekanntmachung des Hinweises auf die Patenterteilung: **06.06.2012**
(21) Anmeldenummer: 09405189.3
(22) Anmeldetag: 02.11.2009
(51) Int. Cl.: F16L 9/147, F16L 33/01, B32B 1/08, B32B 5/18, B32B 15/08, B32B 15/20

(54) **Formstabiles Rohr zum Führen von Wasser**
Dimensionally stable tube for conveying water
Tuyau indéformable pour le guidage d'eau

(43) Veröffentlichungstag der Anmeldung: 04.05.2011
(73) Patentinhaber: R. Nussbaum AG, 4601 Olten (CH)
(72) Erfinder: Bobst, Urs, 4703 Kestenholz (CH); Zeiter, Patrik, 4853 Riken AG (CH)
(74) Vertreter: Rüfenacht, Philipp Michael

(56) Entgegenhaltungen:
- EP-A2- 0 806 600
- EP-A2- 1 416 216
- EP-A2- 1 743 761
- EP-A2- 1 914 462
- DE-A1- 19 639 055
- DE-A1- 19 731 580
- DE-C1- 19 960 046
- US-A- 4 033 612

## Beschreibung

### Technisches Gebiet

Die Erfindung betrifft ein formstabiles Rohr zur Führung von Wasser, welches ein flexibles Innenrohr aus Kunststoff und eine äussere, das Innenrohr umschliessende und mit diesem verbundene Hülse umfasst, wobei die Hülse mindestens eine Formstabilität verleihende Metallschicht und mindestens eine Kunststoffschicht umfasst. Die Erfindung betrifft weiter ein Verfahren zur Herstellung eines solchen Rohrs sowie ein Verfahren zum Anschliessen eines Anschlussstückes mit Aussendichtung an ein solches Rohr.

### Stand der Technik

Zurzeit sind für Trinkwasserleitungen im Wesentlichen drei Arten von Rohren bekannt: flexible Rohre aus Kunststoffen wie PEx, PVC, PB etc., formstabile Verbundrohre aus Kunststoff mit Metalleinlagen sowie starre Rohre aus INOX, Kupfer, verzinktem Stahl oder dergleichen. Flexible Rohre haben den Nachteil, dass sie elastisch sind und somit nach dem Ausrollen die Tendenz haben, wieder in die ursprüngliche Form zurückzukehren. Dies erschwert die Handhabung flexibler Rohre. Zudem benötigen flexible Rohre aufgrund ihrer Elastizität mehr Befestigungsstellen als andere Rohrtypen, damit eine gewünschte Rohrausrichtung beibehalten werden kann. Eine grössere Anzahl Befestigungsstellen verursacht höhere Kosten und akustische Probleme, da Schallwellen leicht über die Befestigungsstellen übertragen werden können.

Starre Rohre haben den Nachteil, dass sie oftmals zu starr sind und somit im Unterschied zu flexiblen oder formstabilen Rohren auch für kleine Richtungsänderungen zusätzliche Verbindungsstücke bzw. Winkelstücke benötigt werden. Zudem ist es aufwändiger, starre Rohre zu trennen, weil in der Regel anstelle einfacher Schneidewerkzeuge Metallsägen oder dergleichen benötigt werden. Deshalb sind Rohrleitungen mit starren Rohren teurer als solche mit flexiblen oder formstabilen Rohren.

Dem gegenüber besitzen formstabile Rohre gute Eigenschaften bezüglich der Handhabung. Ähnlich wie starre Rohre benötigen sie eine geringere Anzahl Befestigungsstellen als flexible Rohre, brauchen aber ebenfalls ähnlich wenige Verbindungsglieder bzw. Winkelstücke wie flexible Rohre, da kleine Richtungsänderungen ebenfalls durch leichtes Biegen der Rohre erreicht werden können. Zudem sind formstabile Rohre wegen ihrer Formstabilität gut handhabbar. Deshalb werden vermehrt formstabile Rohre eingesetzt, insbesondere im Bereich von Trinkwasserleitungen.

Bekannte formstabile Rohre bestehen in der Regel aus zwei oder mehr Kunststoffschichten mit mindestens einer durchgehenden Metalleinlage dazwischen, welche dem Rohr die Formstabilität verleiht. Solche Rohre müssen an Anschlussstellen innen abgedichtet werden, um zu vermeiden, dass im Rohr geführtes Wasser an die Stirnseite des Rohrs und damit zur Metalleinlage gelangt. Würden solche Rohre an Anschlussstellen aussen abgedichtet, d. h. mit Anschlussstücken mit Aussendichtung versehen, so kämen die Metallschichten am Rohrende mit Wasser in Kontakt und würden oxidieren. Dadurch haften die Kunststoffschichten nicht mehr an der Metallschicht. Die folge wäre eine Delamination der Kunststoff-/Metallschichten.

Bekannte formstabile Rohre haben somit den Nachteil, dass sie nicht mit Anschlussstücken mit Aussendichtung versehen werden können. Anschlussstücke mit Aussendichtung sind zurzeit nur für flexible oder starre Rohre bekannt; für formstabile Rohre können nur Anschlussstücke mit Innendichtung verwendet werden. Eine Innendichtung bedeutet aber insbesondere eine Verkleinerung des Innendurchmessers des Rohrquerschnitts im Bereich des Anschlussstücks, was einen Druckabfall innerhalb der Rohrleitung zur Folge hat.

Die US 6,123,111 (Alfred Kärcher GmbH & Co.) beschreibt einen Hochdruckschlauch mit einem Anschlussstück mit einer Aussendichtung, wobei der Schlauch zur Verstärkung ein durchgehendes Drahtgeflecht oder Stoffgeflecht aufweist. Das Verstärkungselement befindet sich zwischen einem flexiblen Innenschlauch und einem Aussenschlauch aus elastischem Kunststoff. Das Anschlussstück ist über das Schlauchende gestülpt, wobei vorgängig sowohl ein Teil des Aussenschlauchs als auch ein etwas kürzerer Teil des Verstärkungselements entfernt wurden. Die Abdichtung des Anschlussstücks erfolgt aussen am Innenrohr, mittels eines O-Rings, welcher sich in einer Aufnahme des Anschlussstücks befindet. Zudem wird ein Teil des Draht- bzw. Stoffgeflechts ebenfalls noch vom Anschlussstück umschlossen. Dadurch entsteht durch die raue Oberfläche des Draht- oder Stoffgeflechts und aufgrund des radialen Druckes des Innenrohrs eine zusätzliche feste Verbindung zwischen dem Hochdruckschlauch und dem Anschlussstück.

In der US 6,123,111 wird nicht genauer darauf eingegangen, wie ein Draht- bzw. ein Stoffgeflecht durchtrennt und danach vom Innenrohr entfernt werden soll. Zudem wird in der US 6,123,111 nicht erörtert, wie das Draht- bzw. Stoffgeflecht mit dem Innenrohr verbunden ist, so dass es, ohne das Innenrohr zu beschädigen, entfernt werden kann. Die Funktion des Draht- bzw. Stoffgeflechts besteht darin, den Hochdruckschlauch für hohe Wasserdrücke innerhalb des Schlauches stabil zu machen.

Aus der gattungsbildenden DE 199 60 046 C1 (Hewing GmbH) ist ein Fitting für ein Kunststoff-Metall-Verbundrohr mit einer Innenschicht aus Kunststoff und einer Metallummantelung um die Innenschicht bekannt, wobei an dem Anschlussende des Verbundrohres die Metallummantelung zum Freilegen der Innenschicht gegenüber dieser axial zurückspringt. Der Fittingkörper weist eine Dichtfläche auf, an der die Innenschicht des Verbundrohres in ihrem freiliegenden Endbereich anliegt. Diese Dichtfläche verläuft koaxial und in einem spitzen Winkel zur Achse des Fittingkörpers. Das Verbundrohr umfasst eine Wandung und ein Innenrohr, um das herum ein Metallrohr aus Aluminium angeordnet ist. Aussen auf dem Metallrohr befindet sich ein Kunststoffrohr. Zum Anschluss des Verbundrohres an dem Fitting wird die Metallummantelung und die Kunststoff-Aussenschicht des Anschlussendes des Verbundrohres abgeschält.

Die US 4,033,612 A (Chevalier Andre) betrifft ein Verfahren zum sicheren Koppeln eines Endes eines armierten flexiblen Schlauches sowie den zugehörigen Schlauch. Ein Innenschlauch ist dazu direkt mit einem Draht oder Streifen helikal umwickelt, wobei der Metallstreifen im Querschnitt rechteckig, Z oder S-förmig sein kann und so eine Armierung bildet. Ausserhalb der Armierung ist eine zweischichtige helikale Drahtarmierung vorgesehen. Schliesslich ist eine Aussenhülle aus Kunststoff vorgesehen. Die Aussenhülle und die Drahtarmierung werden beim armierten Schlauch (im Randbereich) entfernt. Die Armierung wird geschnitten, indem der Schlauch lokal eingedrückt wird. Mehrere Schichten werden treppenförmig geschält. Eine Armatur umfasst mehrere Ringe, zwischen welchen die verschiedenen Lagen des Schlauches einzeln eingeklemmt werden.

Die EP 1 743 761 A2 (Becker Plastics GmbH) betrifft ein Verbundrohr für Hausinstallationen, mit einem innen liegenden Polymerrohr, einer Metallschicht, einer die Metallschicht mit dem Polymerrohr verbindenden ersten Haftvermittlerschicht und einer zweiten Haftvermittlerschicht welche die Metallschicht mit einer aussen liegenden Polymerschicht verbindet. Das innen liegende Polymerrohr kann aus PEx gebildet sein. Bei der Herstellung wird auf die Oberfläche eines Polymerrohres eine Haftvermittlerschicht, auf diese eine Metallschicht, danach eine zweite Haftvermittlerschicht und schliesslich eine Polymerschicht aufgetragen, wobei die Haftvermittlerschichten in Form eines Inlineprozesses aufgebracht werde und wobei das Polymerrohr extrudiert werden kann.

Die Metallschicht wird mittels einer Folie erreicht, welche um die Haftvermittlerschicht gebogen und zu einem Rohr verschweisst wird.

Die DE 197 31 580 A1 (Unicor Rohrsysteme GmbH)betrifft ein Verbundrohr mit einem Innenrohr aus Kunststoff, einem das Innenrohr umgebenden Metallrohr und einem Aussenrohr aus Kunststoff. Das Innen- und Aussenrohr besteht aus unvernetztem PE. Zwischen dem Metallrohr und dem Innen- respektive dem Aussenrohr ist eine Haftvermittlerschicht vorgesehen. Zur Herstellung kann ein Innenrohr extrudiert, mit einem Metallband umwickelt und verschweisst und schliesslich ein Aussenrohr ebenfalls mittels Extrusion aufgebracht werden, wobei wahlweise zwischen dem Metallrohr und dem Innenrespektive dem Aussenrohr eine Haftvermittlerschicht vorgesehen sein kann.

### Darstellung der Erfindung

Aufgabe der Erfindung ist es, ein dem eingangs genannten technischen -Gebiet zugehörendes, formstabiles Rohr zur Führung von Wasser zu schaffen, welches kostengünstig herstellbar ist und an welches ein Anschlussstück mit Aussendichtung angeschlossen werden kann.

Die Lösung der Aufgabe ist durch die Merkmale des Anspruchs 1 definiert. Gemäss der Erfindung umfasst das Rohr ein flexibles Innenrohr aus Kunststoff und eine äussere, das Innenrohr umschliessende und mit diesem verbundene Hülse, welche mindestens eine Formstabilität verleihende Metallschicht und mindestens eine Kunststoffschicht umfasst. Ein Endstück der Hülse ist derart ausgebildet, dass es vom Innenrohr entfernbar ist, ohne dass dabei das Innenrohr beschädigt wird.

Indem die Hülse vom Innenrohr entfernt werden kann, ohne dass das Innenrohr beschädigt wird, entsteht ein Rohrende, welches nur aus dem flexiblen Innenrohr aus Kunststoff besteht und an welches in bekannter Weise ein Anschlussstück mit Aussendichtung angeschlossen werden kann. Wenn das flexible Innenrohr aus einem bestehenden und für Trinkwasser bekannten Rohr besteht, erfüllt auch das erfindungsgemässe formstabile Rohr automatisch alle notwendigen Bestimmungen für Trinkwasserrohre.

Ein erfindungsgemässes Rohr wird an ein Anschlussstück mit Aussendichtung angeschlossen, indem vor dem Anschliessen des Anschlussstücks ein Endstück der Hülse ohne Beschädigung des Innenrohrs vom Innenrohr entfernt wird und dann das Anschlussstück an das Innenrohr mit einer Aussendichtung aussen an das Innenrohr angeschlossen wird.

Dies ist ein kostengünstiges und einfaches Verfahren, formstabile Rohre an Anschlussstücke mit Aussendichtung anzuschliessen. Zudem können herkömmliche Anschlussstücke mit Aussendichtung, welche für bekannte flexible Rohre geeignet sind, nun auch für die erfindungsgemässen formstabilen Rohre verwendet werden. Entsprechend können insbesondere eine Querschnittsverringerung an der Anschlussstelle und damit ein Druckverlust vermieden werden.

Das Herstellen eines erfindungsgemässen Rohrs umfasst bevorzugt die Verfahrensschritte:
a) Extrudieren eines flexiblen Innenrohrs,
b) Aufbringen eines Adhäsionsmittels,
c) Anbringen einer Hülse, welche mindestens eine Metall- und eine Kunststoffschicht umfasst.

Dadurch wird die Herstellung flexibler Rohre als Innenrohr der Ausgangspunkt für die Herstellung des erfindungsgemässen, formstabilen Rohrs. Solche flexiblen Rohre sind im Stand der Technik bekannt und erfüllen entsprechende Normbestimmungen für Leitungssysteme im Trinkwasserbereich. Somit hat man den Vorteil, dass das erfindungsgemässe Rohr die Normbestimmungen ebenfalls erfüllt.

Mit Vorteil wird die Hülse mittels eines Adhäsionsmittels mit dem Innenrohr verbunden. Dadurch erhält man den Vorteil, dass feste Verbindungsstellen zwischen der Hülse und dem Innenrohr bestehen, die die Formstabilität der Hülse auf das Innenrohr übertragen. Zudem ist es möglich, diese festen Verbindungsstellen gezielt zu platzieren, indem das Adhäsionsmittel nicht über einen ganzen Kontaktbereich zwischen dem Innenrohr und der Hülse vorhanden ist. Ein mögliches Adhäsionsmittel ist zum Beispiel lineares Polyethylen niederer Dichte (LLDPE).

Alternativ ist es möglich, auf ein Adhäsionsmittel zu verzichten und die Hülse auf das Innenrohr aufzutragen, solange das Innenrohr nach dem Extrudieren noch warm ist und die Hülse an sich binden kann.

Mit Vorteil ist die Hülse nur in beabstandeten Bereichen mit dem Innenrohr fest verbunden. Insbesondere wird das Adhäsionsmittel nur in beabstandeten, nicht zusammenhängenden Bereichen aufgebracht. Dies hat den Vorteil, dass bei geschickter Wahl der beabstandeten Bereiche die Verbindungsstellen gleich beständig wie bei formstabilen Verbundrohren hergestellt werden können, und dass das Endstück der Hülse, ohne das Innenrohr zu beschädigen, leicht vom Innenrohr entfernt werden kann.

Mit Vorteil weist die Hülse in Abständen Sollbruchstellen auf. Insbesondere schliessen die Sollbruchstellen unmittelbar an die beabstandeten Bereiche an. Durch das Zusammenwirken der Geometrie der beabstandeten Bereiche und der Sollbruchstellen, lässt sich eine besonders einfache Entfernbarkeit des Endstücks der Hülse entlang der Sollbruchstellen erreichen. Das Endstück kann zum Beispiel durch Drehen des Endstückes um eine Rohrachse von der Hülse bei der Sollbruchstelle getrennt werden. Dies hat den Vorteil, dass die Endstücke leicht von der Hülse trennbar sind. Insbesondere ist es möglich, die Sollbruchstellen derart auszugestalten, dass das Endstück ohne Werkzeug entfernt werden kann. Zudem ist es mit der Hilfe der Sollbruchstellen möglich, Endstücke mit definierter Länge abzutrennen.

Mit Vorteil werden die Sollbruchstellen beim Aufbringen der Hülse in der Hülse derart erzeugt, dass sie mit den beabstandeten Bereichen korrelieren, das heisst die Sollbruchstellen und die beabstandeten Bereiche sind nicht unabhängig voneinander über das Rohr verteilt, sondern definieren eine Abfolge von Verbindungsstellen und dazu gehörenden Sollbruchstellen.

Indem die Sollbruchstellen unmittelbar an die beabstandeten Bereiche anschliessen, ist es möglich, eine solche definierte Abfolge von Verbindungsstellen und dazu gehörenden Sollbruchstellen zu erstellen. Dies wiederum ermöglicht, einfach und schnell Endstücke mit einer definierten Länge zu entfernen, wobei durch die Verbindungsstellen an den beabstandeten Bereichen die Übertragung der Formstabilität der Hülse auf das flexible Innenrohr bis hin zur Verbindung gewahrt bleibt.

Alternativ wird auf Sollbruchstellen verzichtet. Zum Trennen kann dann ein Trennwerkzeug wie zum Beispiel Messer, Zange oder Säge verwendet werden.

Rohre benötigen eine bestimmte Stecktiefe, damit sie mit Anschlussstücken verbunden werden können. Als Stecktiefe wird eine Distanz am Ende des Rohrs bezeichnet, über deren Länge das Anschlussstück das Rohr umschliesst. Mit Vorteil sind die Sollbruchstellen in Abständen einer Stecktiefe für Anschlussstücke vorhanden. Dadurch hat man den Vorteil, dass beim Entfernen des Endstücks der Hülse an der Sollbruchstelle ein Ende des Innenrohrs ohne Hülse vorhanden ist, welches ganz vom Anschlussstück umschlossen werden kann. Dadurch ist ein vorheriges Abmessen der Stecktiefe nicht mehr nötig, was sowohl zur Effizienz als auch zur Fehlervermeidung beim Anschliessen des Rohrs an das Anschlussstück beiträgt.

Alternativ können auch andere Abstände, insbesondere längere Abstände als die Stecktiefe, gewählt werden. Kürzere Abstände sind auch möglich, wobei es in diesem Fall vorteilhaft ist, wenn die Abstände einem ganzzahligen Teil der Stecktiefe entsprechen.

Mit Vorteil umfasst die Hülse mindestens eine zusätzliche Schicht, insbesondere eine Schicht aus Polyethylen-Schaum, zur akustischen und/oder thermischen Dämmung. Dadurch kann die Hülse neben der Formstabilität verleihenden Funktion auch dämmende Funktionen übernehmen.

Alternativ wird die Dämmungsfunktion durch die Metallschicht und/oder durch die Kunststoffschicht der Hülse übernommen oder es wird gänzlich auf eine solche Dämmung verzichtet.

Mit Vorteil bildet die Metallschicht eine Innenseite der Hülse. Dadurch erhält man den Vorteil, dass die Kunststoffschicht als Schutzschicht für die Metallschicht dient.

Alternativ wird die Metallschicht eine Aussenseite der Hülse bilden, wodurch das formstabile Rohr ein metallisches Aussehen erhält.

Mit Vorteil besteht das flexible Innenrohr aus PEx. Flexible Kunststoffrohre aus PEx sind bestens bekannt und erfüllen alle notwendigen Bestimmungen für Rohre im Trinkwasserbereich.

Alternativ sind auch andere Materialien wir PP, PB oder dergleichen für das Innenrohr verwendbar. Das Innenrohr kann auch aus mehreren Schichten unterschiedlichen Materials aufgebaut sein.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: einen Schnitt entlang einer Rohrachse eines erfindungsgemässen formstabilen Rohrs mit Anschlussstück mit Aussendichtung;
- Fig. 2: einen Schnitt durch eine Rohrwand entlang einer Rohrachse einer zweiten Ausführungsform;
- Fig. 3: einen Schnitt durch eine Rohrwand entlang einer Rohrachse einer dritten Ausführungsform;
- Fig. 4: einen Schnitt durch eine Rohrwand entlang einer Rohrachse einer vierten Ausführungsform.

Grundsätzlich sind in den Figuren gleiche Teile mit gleichen Bezugszeichen versehen. Es ist zu beachten, dass aus den Figuren keine Grössenverhättnisse heraus gelesen werden können. Damit die Sachverhalte besser zur Geltung kommen, wurden einzelne Teile im Vergleich zu den eigentlichen Grössenverhältnissen vergrössert dargestellt.

### Wege zur Ausführung der Erfindung

Das Anwendungsgebiet der erfindungsgemässen Rohre ist vielfältig. Dies gilt auch für die möglichen Anschlussstücke mit Aussendichtung, die an diese Rohre angeschlossen werden können. Damit Rohre und Anschlussstücke zusammenpassen, müssen die Dimensionen der Rohre und der Anschlusstücke zu einander korrespondieren. Die Dimensionen der Rohre der Ausführungsbeispiele sind derart gewählt, dass Steckverbinder, wie sie in der Druckschrift EP 2 108 874 (R. Nussbaum AG) beschrieben sind, als Anschlussstück angeschlossen werden können. Andere Anschlussstücke können andere Dimensionen des erfindungsgemässen Rohrs voraussetzen.

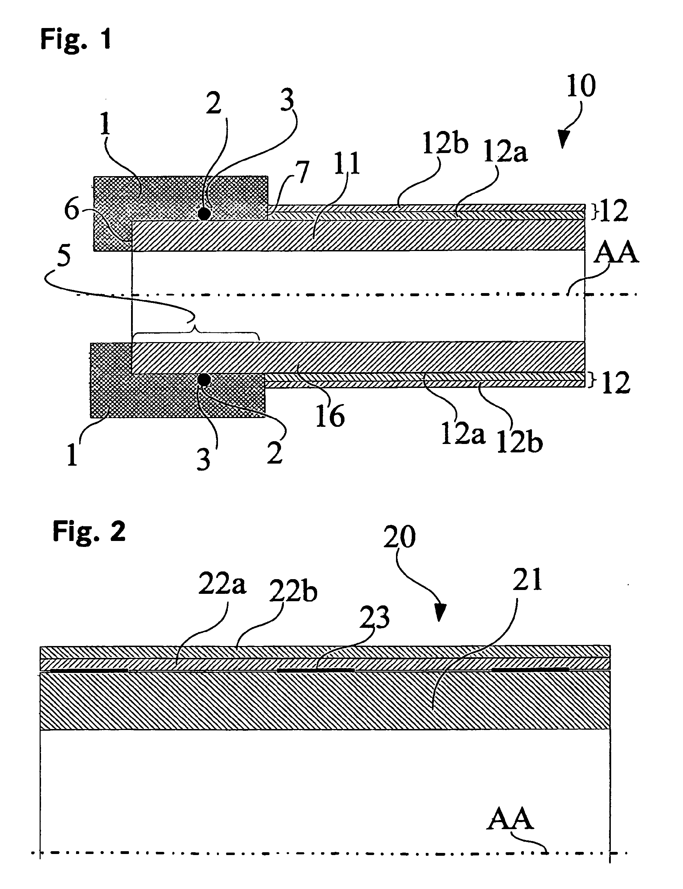

Die Figur 1 zeigt einen Schnitt entlang einer Rohrachse AA einer ersten Ausführungsform 10 eines erfindungsgemässen Rohrs, welches an ein Anschlussstück 1 mit Aussendichtung angeschlossen wurde. Das Anschlussstück 1 ist nur sehr schematisch dargestellt, insoweit es für das Verständnis der Erfindung notwendig ist. Die erste Ausführungsform 10 mit einem Rohrinnendurchmesser von 14.4 mm besteht aus einem flexiblen Innenrohr 11 aus PEx mit einer Wandstärke von 2.8 mm und einer Hülse 12, welche das Innenrohr 11 umschliesst und dem flexiblen Innenrohr 11 Formstabilität verleiht. Die Hülse 12 umfasst eine innenseitig angebrachte Metallschicht 12a aus Aluminium mit einer Dicke von 0.3 mm und eine aussenseitig angebrachte Kunststoffschicht 12b aus PE mit einer Dicke von 0.2 mm. Ein Endstück der Hülse 12 wurde auf einer Länge entlang der Rohrachse entfernt, die einer Stecktiefe 5 des Anschlussstücks 1 entspricht. Die Stecktiefe 5 erstreckt sich von einem Anschlag 6 beim Anschlussstück 1, welcher von einem angeschlossenen Rohrende des Innenrohrs 11 berührt wird, in Richtung der Rohrachse AA bis zu einer Aussenkante 7 des Anschlussstücks 1. Die Stecktiefe 5 beträgt für Anschlussstücke, wie sie zum Bespiel in der Druckschrift EP 2 108 874 (R. Nussbaum AG) beschrieben werden, 34 mm. Die Abdichtung des Anschlussstücks 1 erfolgt aussen am Innenrohr 11 mittels eines O-Ringes 2 aus Gummi, welcher sich in einer Aussparung 3 des Anschlussstücks 1 befindet und das Innenrohr 11 umschliesst.

Die Ausführungsform 10 wird wie folgt hergestellt: Zuerst wird das Innenrohr 11 aus PEx extrudiert. Danach wird das Innenrohr 11 mit der Metallschicht 12a in der Form einer Aluminium-Folie umschlossen, wobei eine Verbindungsnaht der Metallfolie mittels eines Lasers verschweisst wird. Danach erfolgt das Aufbringen der Kunststoffschicht 12b, welche über die Metallschicht 12a extrudiert wird. Als Variante kann die Metallschicht 12a vorgängig mit der Kunststoffschicht 12b beschichtet werden und dann als ganzes auf das Innenrohr 11 aufgebracht werden. Die Metallschicht 12a kann mit dem Innenrohr 11 bzw. mit der Kunststoffschicht 12b mittels eines linearen Polyethylens niederer Dichte (LLDPE) als Adhäsionsmittel verbunden werden. Alternativ kann die Metallschicht 12a auf das Innenrohr 11 aufgetragen werden, solange das Innenrohr noch warm ist, das heisst solange das Innenrohr 11 noch verformbar und dadurch adhäsiv für die Metallschicht 12a ist. Alternativ oder zusätzlich kann die Metallschicht 12a durch magnetische Induktion erwärmt werden, wodurch die Kunststoffschicht ebenfalls mit der Metallschicht verbunden wird. Des Weiteren kann unterstützend ein Adhäsionsmittel wie LLDPE die Verbindung verstärken. Das Adhäsionsmittel kann dabei auch nur partiell an jenen Stellen aufgetragen werden, wo eine permanente feste Verbindung gewünscht ist.

Die Figur 2 zeigt einen Schnitt durch eine Rohrwand entlang der Rohrachse AA einer zweiten Ausführungsform 20 eines erfindungsgemässen Rohrs ohne Anschlussstück. Die zweite Ausführungsform 20 umfasst ein Innenrohr 21 mit einer Wandstärke von 2.8 mm, eine Metallschicht 22a mit einer Dicke von 0.3 mm und eine Kunststoffschicht 22b mit einer Dicke von 0.2 mm, wobei die Metallschicht 22a und die Kunststoffschicht 22b zusammen eine Hülse 22 bilden, welche mittels eines LLDPE als Adhäsionsmittels in beabstandeten Bereichen 23 am Innenrohr 21 befestigt ist. Die Metallschicht 22a verleiht dem flexiblen Innenrohr die Formstabilität und die Kunststoffschicht 22b dient als Schutz der Metallschicht 22a. Das Adhäsionsmittel selber wird dünn aufgetragen und ist in der Regel nicht dicker als 100 µm.

Die beabstandeten Bereiche 23 mit dem Adhäsionsmittel sind ringförmig mit einer Breite von 5 mm um die Rohrachse AA zwischen der Hülse 22 und dem Innenrohr 21 angelegt. Ein Abstand zwischen den beabstandeten Bereichen 23, das heisst Bereiche, die kein Adhäsionsmittel aufweisen, entspricht der Stecktiefe 5 des Anschlussstücks 1. Da die beabstandeten Bereiche 23 von aussen nicht sichtbar sind, sind auf einer Aussenfläche der Hülse Markierungen (nicht gezeichnet) angebracht, die die Lage der beabstandeten Bereiche anzeigen.

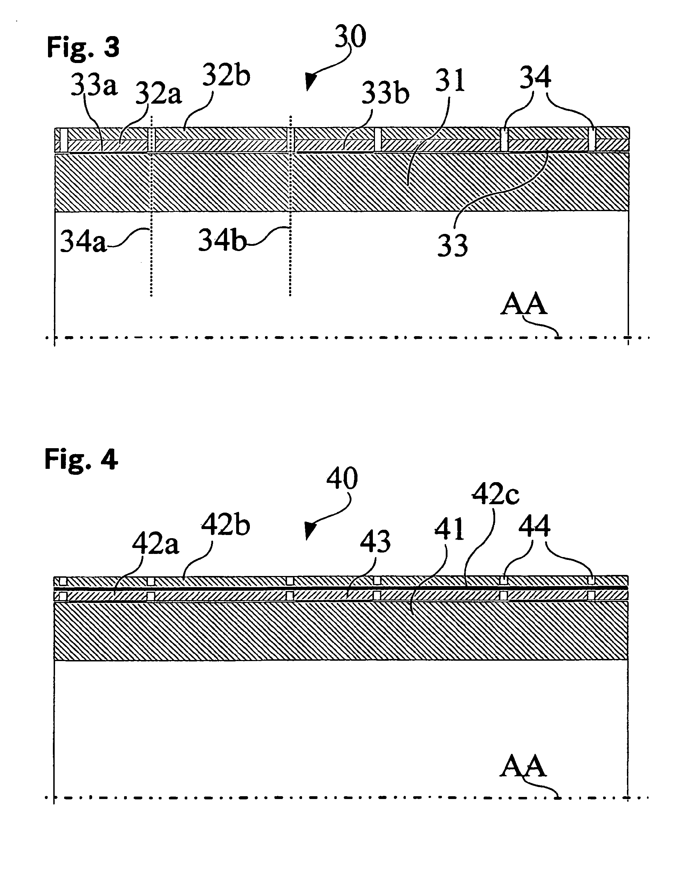

Die Figur 3 zeigt einen Schnitt durch eine Rohrwand entlang der Rohrachse AA einer dritten Ausführungsform 30 eines erfindungsgemässen Rohrs. Im Unterschied zur zweiten Ausführungsform 20 ist eine Hülse 32 der dritten Ausführungsform 30 zusätzlich mit Sollbruchstellen in der Form von ringförmig auf einer Kreislinie um die Rohrachse AA angeordneten Perforationen 34 ausgestattet, welche das Abtrennen eines Endstückes der Hülse 32 erleichtern. Die aus Bohrungen bestehenden Perforationen 34 durchdringen dabei sowohl eine Metallschicht 32a als auch eine Kunststoffschicht 32b der Hülse 32. Die Bohrungen haben einen Lochdurchmesser von 1 mm und sind jeweils 1.5 mm von einander beabstandet. Die Hülse 32 ist ebenfalls an beabstandeten Bereichen 33 mittels eines Adhäsionsmittels am Innenrohr 31 befestigt. Die Perforationen 34 schliessen dabei beidseitig der beabstandeten Bereiche 33 an.

Die Perforationen 34 können sowohl vor dem Aufbringen der Hülse 32 auf das Innenrohr 31 an der Hülse 32 angebracht werden als auch nachträglich der Hülse 32 zugeführt werden. Zum Beispiel kann eine Aluminium-Folie als Metallschicht 32a vorgängig, vor dem Aufbringen, perforiert werden.

Zum Anschliessen der dritten Ausführungsform 30 an das Anschlussstück 1 wird zuerst das ganze Rohr, inklusive Innenrohr 31, entlang einer Perforationslinie 34a mit vorbekannten Werkzeugen derart getrennt, dass ein anschliessender, beabstandeter Bereich 33a ebenfalls abgetrennt wird. Somit weist die Hülse 32 an einer nun entstandenen Endfläche des Rohrs keine Befestigungsstelle auf. Danach wird ein Endstück der Hülse 32 bei der nächstliegenden Perforationslinie 34b vor dem nächsten beabstandeten Bereich 33b getrennt. Das Trennen kann je nach Art der Sollbruchstelle manuell, zum Beispiel durch eine Drehbewegung um die Rohrachse AA, erfolgen oder mit der Hilfe eines Werkzeuges. Nun ist das Endstück weder mit dem Rest der Hülse 32 noch mit dem Innenrohr 31 fest verbunden und es kann, ohne das Innenrohr 31 zu beschädigen, leicht vom Innenrohr 31 abgezogen werden.

Ist, wie dies beim Ausführungsbeispiel 20 gemäss Figur 2 der Fall ist, keine Sollbruchstelle vorhanden, so kann das Endstück der Hülse 21 dadurch entfernt werden, dass an der gewünschten Stelle die Hülse 21 angeritzt wird, wodurch eine Sollbruchstelle entsteht. Danach kann das Endstück wie oben beschrieben entfernt werden. Anstatt die Hülse 21 nur anzuritzen, kann diese auch ganz getrennt werden. Dabei ist darauf zu achten, dass das darunterliegende Innenrohr 21 nicht beschädigt wird. Danach kann das Endstück wie oben beschrieben vom Innenrohr 21 entfernt werden.

Die Figur 4 zeigt einen Schnitt durch eine Rohrwand entlang der Rohrachse AA einer vierten Ausführungsform 40 eines erfindungsgemässen Rohrs. Im Unterschied zur dritten Ausführungsform 30 umfasst die Ausführungsform 40 Sollbruchstellen, welche als ringförmige Nuten 44 ausgebildet sind. Die Nuten 44 sind sowohl in einer Metallschicht 42a als auch in einer Kunststoffschicht 42b, die eine Hülse 42 bilden, eingelassen. Die Nuten 44 besitzen eine Spaltbreite von 0.25 mm und eine Spalttiefe von 1.5 mm. Zusätzlich umfasst die Hülse 42 noch eine schalldämmende Schicht 42c aus Polymethylen-Schaum, welche sich zwischen der Metall- 42a und der Kunststoffschicht 42b befindet und keine Sollbruchstellen aufweist.

Das Innenrohr selber kann ebenfalls aus mehreren, nicht-metallischen Schichten bestehen. Insbesondere können im Innenrohr sowohl thermisch und/oder akustisch dämmende Schichten als auch Sauerstoffsperrschichten, zum Beispiel aus EVOH, vorhanden sein. Solche Vollkunststoff-Verbundrohre sind an und für sich bekannt und können für Anschlusstücke mit Aussendichtung verwendet werden. Da diese Rohre aber keine Metallschicht umfassen, sind sie nicht formstabil, sondern flexibel.

Die Perforationen, welche in der dritten Ausführungsform 30 als Sollbruchstellen dienen, können jede mögliche Form annehmen. Anstelle von runden Löchern sind ebenfalls Schlitze oder ellipsenförmige Perforationen vorstellbar. Die Perforationen können auch derart sein, dass nur noch einzelne Stege die einzelnen Abschnitte der Hülse zusammenhalten. Zudem ist es nicht notwendig, dass die Perforationen alle Schichten der Hülse durchdringen. Je nach Zusammensetzung und Material der einzelnen Schichten, können die Perforationen nur einzelne Schichten durchdringen.

Zudem können verschiedene Typen von Sollbruchstellen miteinander kombiniert werden. So können zum Beispiel die Sollbruchstellen in der Kunststoffschicht als Nuten und zugleich in der Metallschicht als Löcher ausgestaltet sein.

Auch wenn die Hülse mit zusätzlichen akustisch und/oder thermisch dämmenden Schichten versehen wird, ist anzumerken, dass sowohl die Metallschicht als auch die Kunststoffschicht schon eine dämmende Funktion übernehmen können.

Zudem kann die Hülse sowohl aus mehreren Metallschichten als auch aus mehreren Kunststoffschichten bestehen, die Formstabilität verleihende, schützende und/oder dämmende Funktionen erfüllen können. Dabei können die einzelnen Metall- und Kunststoffschichten sowohl beliebig angeordnet sein als auch aus unterschiedlichen Materialien bestehen. Als Materialien für die Metall- und die Kunststoffschicht können alle bekannten Materialien gebraucht werden, die bei herkömmlichen Verbundrohren eingesetzt werden. Für die Metallschicht ist dies neben dem bereits erwähnten Aluminium insbesondere auch rostfreier Stahl (INOX). Dabei kann die Abfolge von Metallschicht und Kunststoffschicht in der Hülse je nach Anforderung gewählt werden.

Als Anschlussstück dienen alle möglichen Teile, an welche Rohre angeschlossen werden können. Dazu zählen unter anderem Fittings, Armaturen, Ventile und Regler, welche insbesondere für Anwendungen im Trinkwasserbereich oder in Heizungs- und Kühlsystemen gebraucht werden. Dabei werden Anschlussstücke mit Steckverbindungen bevorzugt. Es sind aber auch Anschlussstücke mit Schraub- oder Pressverbindungen vorstellbar.

Mögliche Adhäsionsmittel auf LLDPE-Basis sind zum Beispiel anhydridgetropfte Copolymere. Solche Kleber werden unter anderem für Verbundrohre eingesetzt und ermöglichen eine feste Verbindung zwischen Metall- und Kunststoffschichten sowie zwischen zwei Kunststoffschichten. Da diese Adhäsionsmittel beim Versuch, die Verbindung zu lösen, die benachbarten Schichten beschädigen können, dienen sie mit Vorteil nicht durchgehend als Verbindung zwischen der Hülse und dem Innenrohr, sondern können partiell, nur in beabstandeten Bereichen aufgetragen werden.

Zudem kann, quasi als Gegenstück zum Adhäsionsmittel, auch ein Anti-Adhäsionsmittel an jenen Stellen aufgebracht werden, wo die Hülse auf dem Innenrohr nicht gut haften sollte, so dass die Hülse leicht entfernt werden kann. Dies betrifft die Stellen zwischen den beabstandeten Bereichen. Als Anti-Adhäsionsmittel kann zum Beispiel eine Schicht auf der Basis von Polytetrafluorethylen (PTFE) dienen.

Falls die Sollbruchstellen von aussen nicht sichtbar sind bzw. wenn gar keine Sollbruchstellen vorhanden sind, dann können Markierungen aussen an der Hülse angebracht sein, die anzeigen, wo die Hülse getrennt werden kann. Optimale Trennorte befinden sich beidseitig der beabstandeten Bereiche, an diese anschliessend. Falls auch keine beabstandete Bereiche vorhanden sind, so können Markierungen dennoch in Abständen angebracht sein, mit deren Hilfe eine Länge der Stecktiefe für das zu entfernende Endstück abgemessen werden kann.

Zusammenfassend ist festzustellen, dass ein formstabiles Rohr zur Führung von Wasser geschaffen wurde, welches kostengünstig herstellbar ist und an ein Anschlussstück mit Aussendichtung angeschlossen werden kann.

## Patentansprüche

1. Formstabiles Rohr (10; 20; 30; 40) zur Führung von Wasser, umfassend ein flexibles Innenrohr (11; 21 ;31; 41) aus Kunststoff und eine äussere, das Innenrohr (11; 21; 31; 41) umschliessende und mit diesem verbundene Hülse (12; 22; 32; 42), welche mindestens eine Formstabilität verleihende Metallschicht (12a; 22a; 32a; 42a) und mindestens eine Kunststoffschicht (12b; 22b; 32b; 42b) umfasst, wobei die Hülse derart ausgebildet ist, dass ein Endstück der Hülse (12; 22; 32; 42) vom Innenrohr (11; 21 ;31; 41) entfernbar ist, ohne dass dabei das Innenrohr (11; 21; 31; 41) beschädigt wird, **dadurch gekennzeichnet, dass** die Hülse nur in beabstandeten Bereichen (23; 33; 43) mit dem Innenrohr (11; 21; 31; 41) fest verbunden ist.

2. Rohr (10; 20; 30; 40) nach Anspruch 1, **dadurch gekennzeichnet, dass** die Hülse (12; 22; 32; 42) mit dem Innenrohr (11; 21; 31; 41) mittels eines Adhäsionsmittels verbunden ist.

3. Rohr (10; 20; 30; 40) nach Anspruch 1, **dadurch gekennzeichnet, dass** die Hülse (12; 22; 32; 42) in Abständen, insbesondere unmittelbar an die beabstandeten Bereiche (23; 33, 33a, 33b; 43) anschliessend, Sollbruchstellen (34, 34a, 34b; 44) aufweist.

4. Rohr (10; 20; 30; 40) nach Anspruch 3, **dadurch gekennzeichnet, dass** die Sollbruchstellen (34, 34a, 34b; 44) in Abständen einer Stecktiefe (5) für Anschlussstücke (1) vorhanden sind.

5. Rohr (10; 20; 30; 40) nach einem der Ansprüche 1 bis 4, **dadurch gekennzeichnet, dass** die Hülse (12; 22; 32; 42) mindestens eine zusätzliche Schicht, insbesondere aus Polyethylen-Schaum (42c), zur akustischen und/oder thermischen Dämmung umfasst.

6. Rohr (10; 20; 30; 40) nach einem der Ansprüche 1 bis 5, **dadurch gekennzeichnet, dass** die Metallschicht (12a; 22a; 32a; 42a) eine Innenseite der Hülse (12; 22; 32; 42) bildet.

7. Rohr (10; 20; 30; 40) nach einem der Ansprüche 1 bis 6, **dadurch gekennzeichnet, dass** das Innenrohr (11; 21; 31; 41) aus PEx besteht.

8. Verfahren zum Anschliessen eines formstabiles Rohrs (10; 20; 30; 40) gemäss einem der Ansprüche 1 bis 7 an ein Anschlussstück (1) mit Aussendichtung, wobei das Anschlussstück (1) an das Innenrohr (11; 21; 31; 41) mit einer Aussendichtung aussen an das Innenrohr (1 1; 21; 31; 41) angeschlossen wird, wobei vor dem Anschliessen des Anschlussstücks (1) ein Endstück der Hülse (12; 22; 32; 42) ohne Beschädigung des Innenrohrs (11; 21; 31; 41) vom Innenrohr (11; 21; 31; 41) entfernt wird, **dadurch gekennzeichnet, dass** das Endstück der Hülse (12; 22; 32; 42) durch Drehen um eine Rohrachse (AA) entlang von Sollbruchstellen (34, 34a, 34b; 44) vom Innenrohr (11; 21; 31; 41) entfernt wird.

9. Verfahren zur Herstellung eines formstabilen Rohrs (10; 20; 30; 40) nach einem der Ansprüche 1 bis 7, welches die Verfahrensschritte umfasst:
a) Extrudieren eines flexiblen Innenrohrs (11; 21; 31; 41),
b) Aufbringen eines Adhäsionsmittels nur in beabstandeten, nicht zusammenhängenden Bereichen (23; 33, 33a, 33b; 43),
c) Anbringen einer Hülse (12; 22; 32; 42), welche mindestens eine Metall- (12a; 22a; 32a; 42a) und eine Kunststoffschicht (12b; 22b; 32b; 42b) umfasst.

10. Verfahren nach Anspruch 9, **dadurch gekennzeichnet, dass** beim Aufbringen der Hülse (12; 22; 32; 42) Sollbruchstellen (34, 34a, 34b; 44) in der Hülse (12; 22; 32; 42) erzeugt werden, welche mit den beabstandeten Bereichen (23; 33, 33a, 33b; 43) korrelieren.

## Claims

1. Dimensionally stable tube (10;20;30;40) for conveying water, comprising a flexible inner tube (11;21;31;41) made from plastic, and an outer sleeve (12;22;32;42) which surrounds the inner tube (11,21;31;41) and is connected to the latter and comprises at least one metal layer (12a; 22a; 32a;42a) conferring dimensional stability and at least one plastics layer (12b;22b;32b;42b), wherein the sleeve is designed in such a manner that an end piece of the sleeve (12;22;32;42) can be removed from the inner tube (11;21;31;41) without the inner tube (11;21;31;41) being damaged in the process, **characterized in that** the sleeve is fixedly connected to the inner tube (11;21;31;41) only in spaced-apart regions (23; 33;43).

2. Tube (10;20;30;40) according to Claim 1, **characterized in that** the sleeve (12;22;32;42) is connected to the inner tube (11;21;31;41) by means of an adhesion means.

3. Tube (10;20;30;40) according to Claim 1, **characterized in that** the sleeve (12;22;32;42) has predetermined breaking points (34,34a,34b;44) adjoining the spaced-apart regions (23;33, 33a,33b;43) at distances, in particular directly.

4. Tube (10;20;30;40) according to Claim 3, **characterized in that** the predetermined breaking points (34,34a,34b;44) are present at distances of a plug-in depth (5) for connecting pieces (1).

5. Tube (10;20;30;40) according to one of Claims 1 to 4, **characterized in that** the sleeve (12;22;32;42) comprises at least one additional layer, in particular of polyethylene foam (42c), for acoustic and/or thermal insulation.

6. Tube (10;20;30;40) according to one of Claims 1 to 5, **characterized in that** the metal layer (12a;22a;32a;42a) forms an inner side of the sleeve (12;22;32;42).

7. Tube (10;20;30;40) according to one of Claims 1 to 6, **characterized in that** the inner tube (11;21;31;41) is composed of PEx.

8. Method for connecting a dimensionally stable tube (10;20;30;40) according to one of Claims 1 to 7 to a connecting piece (1) with an external seal, wherein the connecting piece (1) is connected to the inner tube (11;21;31;41) on the outside of the inner tube (11;21;31;41) with an external seal, wherein, before the connecting piece (1) is connected, an end piece of the sleeve (12;22;32;42) is removed from the inner tube (11;21;31;41) without damaging the inner tube (11;21;31;41), **characterized in that** the end piece of the sleeve (12; 22; 32; 42) is removed from the inner tube (11;21;31;41) along predetermined breaking points (34,34a,34b;44) by rotation about a tube axis (AA).

9. Method for producing a dimensionally stable tube (10;20;30;40) according to one of Claims 1 to 7, which method comprises the following method steps:
a) extruding a flexible inner tube (11;21;31;41),
b) applying an adhesion means only in regions (23;33,33a,33b;43) which are spaced apart and are not joined together,
c) attaching a sleeve (12;22;32;42) which comprises at least one metal layer (12a;22a;32a;42a) and a plastics layer (12b;22b;32b;42b).

10. Method according to Claim 9, **characterized in that**, during the attaching of the sleeve (12;22;32;42), predetermined breaking points (34,34a,34b;44) which are correlated with the spaced-apart regions (23;33,33a,33b;43) are produced in the sleeve (12;22;32;42).

## Revendications

1. Tuyau de forme stable (10;20;30;40) pour transporter de l'eau, comprenant un tuyau interne flexible (11;21;31;41) en plastique et une gaine extérieure (12;22;32;42) entourant le tuyau interne (11;21;31;41) et connectée à celui-ci, laquelle comprend au moins une couche métallique (12a;22a;32a;42a) conférant une stabilité de forme et au moins une couche de plastique (12b;22b;32b;42b), la gaine étant réalisée de telle sorte qu'un embout de la gaine (12;22;32;42) puisse être enlevé du tuyau interne (11;21;31;41) sans endommager le tuyau interne (11;21;31;41), **caractérisé en ce que** la gaine est connectée fermement au tuyau interne (11;21;31;41) uniquement dans des régions espacées (23;33 ;43).

2. Tuyau (10;20;30;40) selon la revendication 1, **caractérisé en ce que** la gaine (12;22;32;42) est connectée au tuyau interne (11;21;31;41) par l'intermédiaire d'un agent adhésif.

3. Tuyau (10;20;30;40) selon la revendication 1, **caractérisé en ce que** la gaine (12;22;32;42) présente, à intervalles, des zones destinées à la rupture (34,34a,34b;44), notamment se raccordant directement aux régions espacées (23;33,33a,33b;43).

4. Tuyau (10;20;30;40) selon la revendication 3, **caractérisé en ce que** les zones destinées à la rupture (34,34a,34b;44) sont disposées à certaines distances d'une profondeur d'enfichage (5) pour des pièces de raccordement (1).

5. Tuyau (10;20;30;40) selon l'une quelconque des revendications 1 à 4, **caractérisé en ce que** la gaine (12;22;32;42) comprend au moins une couche supplémentaire, notamment en mousse de polyéthylène (42c) pour l'isolation acoustique et/ou thermique.

6. Tuyau (10;20;30;40) selon l'une quelconque des revendications 1 à 5, **caractérisé en ce que** la couche métallique (12a;22a;32a;42a) forme un côté interne de la gaine (12;22;32;42).

7. Tuyau (10;20;30;40) selon l'une quelconque des revendications 1 à 6, **caractérisé en ce que** le tuyau interne (11;21;31;41) se compose de PEx.

8. Procédé de raccord d'un tuyau de forme stable (10;20;30;40) selon l'une quelconque des revendications 1 à 7 à une pièce de raccordement (1) avec une garniture d'étanchéité externe, la pièce de raccordement (1) tuyau interne (11;21;31;41) étant raccordée à l'extérieur au tuyau interne (11;21;31;41) par une garniture d'étanchéité externe, un embout de la gaine (12;22;32;42) étant enlevé du tuyau interne (11;21;31;41) sans endommager le tuyau interne (11;21;31;41) avant le raccordement de la pièce de raccordement (1), **caractérisé en ce que** l'embout de la gaine (12;22;32;42) est enlevé du tuyau interne (11;21;31;41) par rotation autour d'un axe de tuyau (AA) le long de zones destinées à la rupture (34, 34a,34b;44).

9. Procédé de fabrication d'un tuyau de forme stable (10;20;30;40) selon l'une quelconque des revendications 1 à 7, qui comprend les étapes de procédé suivantes:
a) extrusion d'un tuyau interne flexible (11;21;31;41),
b) application d'un agent adhésif uniquement dans des régions espacées non rattachées (23;33,33a,33b;43),
c) montage d'une gaine (12;22;32;42) qui comprend au moins une couche métallique (12a ; 22a ; 32a ; 42a) et une couche de plastique (12b ; 22b ; 32b ; 42b).

10. Procédé selon la revendication 9, **caractérisé en ce que** lors de l'application de la gaine (12;22;32;42), des zones destinées à la rupture (34,34a,34b;44) sont produites dans la gaine (12;22;32;42), lesquelles sont en corrélation avec les régions espacées (23 ;33,33a,33b;43).
